# EUROPEAN PATENT SPECIFICATION

(11) **EP 2 336 223 B1**
(45) Date of publication and mention of the grant of the patent: **08.02.2012**
(21) Application number: 09178404.1
(22) Date of filing: 08.12.2009
(51) Int. Cl.: C08J 9/00, C08G 18/08

(54) **Process for the preparation of flexible polyurethane foam and foam obtained thereby**
Verfahren zur Herstellung von flexiblem, elastischem Polyurethanschaum und damit erhaltener Schaum
Procédé pour la préparation de mousse de polyuréthane souple et mousse résultante

(43) Date of publication of application: 22.06.2011
(73) Proprietor: Recticel, 1140 Brussel (Evere) (BE)
(72) Inventor: De Kesel, Jean-Pierre, 2580 Putte-Peulis (BE)
(74) Representative: Van Reet, Joseph

(56) References cited:
- WO-A1-01/32791
- WO-A1-96/37539
- US-A- 4 273 901

## Description

The present invention is directed to a process for the preparation of a flexible polyurethane foam and to the polyurethane foam prepared by that process. The foam is in particular a flexible polyurethane foam which has a density of between 25 and 120 kg/m³, a resilience, measured at 20°C in accordance with ASTM D 3574 H, higher than 35%, and an ILD 40% hardness, measured in accordance with ISO 2439 B, of between 60 and 500 N.

Flexible polyurethane foams are widely used for body support applications, such as mattresses, mattress toppers, pillows, cushions of any types for use in beds, seats or other applications such as floor mats, etc. Besides providing functional support to the human body, the body supporting material should also provide a good pressure distribution, a sufficient physiological comfort, as well as an adequate breathability.

High resilience (HR) polyurethane foams have been widely used for body support applications, due to their superior support and resilience characteristics. They have in particular a quite high SAG factor and also a high resilience. However, the uniformity of the pressure distribution on such kind of foams is not optimal, which may lead to pressure-points, and making them thus not suitable for people requiring pressure-relief, for instance in hospitals where long-term patients often suffer from pressure sores.

Visco-elastic (VE) foams have found wide acceptance as body support materials. In contrast to conventional polyurethane foams and high resilience polyurethane foam they have resilience figures which are markedly lower than 40%, and which are usually even lower than 15%. VE foams are rather soft but supportive foam materials, characterised by a very slow recovery and an indentation hardness which is temperature sensitive. This property allows the body to sink more deeply into the foam, while still maintaining the firm feel of a good quality resilient foam. VE foams thus gently conform to the shape of the user's body, allowing pressure to be absorbed uniformly and distributed more evenly, which is of particular benefit in the prevention and healing of pressure sores. A disadvantage of VE foams is however that their hardness increases with decreasing temperature, which makes them very uncomfortable for use in cold rooms or areas. Further, VE foams are denser and more closed-celled than conventional HR foams, leading to a worse breathability and thus decreased thermophysiological comfort.

Another class of materials used for body support materials are gels. Gels are very well-known for their excellent balanced pressure distribution, due to their three dimensional deformation properties leading to flattening pressure points. They further provide a good physical comfort, such as a low hardness and a good elasticity, and provide the user with a good "feel". However, gels, such as polyurethane gels, exhibit a relatively high thermal conductivity as well as a very high heat capacity. This leads to a cool feel as heat is removed from the body when in contact with the gel. A further disadvantage of gels is that they have a very high dead weight (specific weight usually between 600-1100 kg/m³). In order to decrease the specific weight of gels, cellular gels, such as cellular polyurethane gels, have been developed, as disclosed in US 4 404 296. They are blown with an inert gas such as air, N₂ or CO₂. Besides the reduced specific weight, their heat capacity is reduced as well. However, cellular gels have the disadvantage that under influence of compression, the cells of the foamed gel stick to each other because of the undercrosslinked matrix, and that the foamed gel has bad mechanical properties, especially a very bad elasticity. Besides their very low resiliency, they are not breathable at all since they don't allow any air transfer. Foamed gels are thus not at all suitable as body support materials.

Because of their very high specific weight and their high thermal capacity, gel layers are preferably used with one or more additional body supporting layers, such as foam layers, spring layers and the like. Mattress or mattress toppers comprising polyurethane gel layers overlying foam layers are for instance known from WO 2006/100558, US 2001/0018466 and US 2005/0017396. Gel layers may be integrally attached to the additional support layers, for instance by gluing, sewing, welding or by chemical bonding. Gel layers can also be separate bodies inserted in foam layers, as illustrated in US2007/0226911. In order to enable the gel layers to develop their pressure distributing effect, they need a complete envelopment by means of a relatively thin highly elastic cover, which should be impermeable to prevent penetration of the tacky gel material through the cover. Such cover is disadvantageous for air passage and thus breathability. Furthermore, it increases the production cost of the body support manufacturing process. Due to the minimum thickness required to achieve the desired pressure distribution properties, the obtained mattresses with integrated gel layers are still very heavy and thus difficult to handle.

In order to lower the weight, the overall rate of thermal transfer and the overall thermal mass of a gel mattress which consists of a gel layer covered with an upper and a lower foam layer, US 2005/0017396 discloses an extruded gel layer which has vertical hollow columns. These hollow columns have walls which partially or completely buckle when a person is lying on the mattress. A drawback of this mattress is that its weight is still substantially larger than the weight of a polyurethane foam mattress. The gel layer has indeed to be relatively thick in order to provide the desired improved pressure distribution effects. Moreover, due to the vertical hollow columns in the gel layer, these pressure distribution properties are lost to some extent and, what's more, the load bearing properties of the mattress are getting worse. In this respect the SAG factor is an important parameter of a body supporting foam. This SAG factor or support factor is the compressive strength at 65% indentation divided by the compressive strength at 25% indentation. A good support and a comfortable feeling is provided by foams such as HR foams and latex foams which have a relatively high SAG factor, more particularly a SAG factor higher than 2.5. A drawback of the hollow columns in the gel layer is that when the walls thereof buckle under the load of a person lying on the mattress, the compressive strength provided by these walls is reduced so that the person is not or less optimally supported.

It is an object of the invention to provide a new process for preparing a flexible polyurethane foam which is resilient and breathable but which still enables to provide improved foam properties without showing however the drawbacks of a gel layer.

To this end, the process for the preparation of a flexible polyurethane foam according to the present invention, comprises the step of allowing a reaction mixture, which comprises a blowing agent, to foam to produce the polyurethane foam, and is characterised in that before the reaction mixture is allowed to foam, at least one organogel material is dispersed therein. The organogel material is thus incorporated in the polyurethane foam upon foam expansion to form at least part of the cell ribs and/or cell walls of this polyurethane foam.

Incorporating a gel material in a polyurethane coating material is already known per se from WO 01/32791. The polyurethane coating material is not a flexible polyurethane foam but is a rigid foam or a microcellular elastomer and has a density which is generally higher than 200 kg/m³. The gel material is incorporated in this polyurethane coating material to improve the insulating properties thereof. In contrast to the present invention, the gel material is therefore an aerogel or xerogel, which contains no liquid and which is thus a solid material.

The organogel material used in the process of the present invention is on the contrary a dimensionally stable, jelly-like material. Gels are defined as a substantially dilute cross-linked system which exhibits no flow when in the steady state. Gels are mostly liquid, yet they behave like solids due to the three-dimensional crosslinked network within the liquid. Apart from the xerogels, which are dried to form a porous product which is not jelly-like anymore, there are two main types of gels namely hydrogels and organogels. Hydrogels contain water as the dispersion medium (liquid). Organogels are composed of a liquid organic phase entrapped in a three-dimensionally cross-linked network. They are highly elastic. In the flexible polyurethane foam according to the invention, the organogel material forms part of the cell ribs and/or cell walls so that the physical properties of the foam are modified thereby. The incorporation of the organogel material in the polyurethane material of the foam may in particular reduce the tensile stress in the foam material when locally compressing this material. In this way, a better pressure distribution can be achieved without the drawbacks of a gel layer and while maintaining the desired support and resilient properties of the polyurethane foam. Such advantageous effect cannot be achieved when simply coating the cell ribs and/or the cell walls of a polyurethane foam with an organogel material, for example by impregnation the foam therewith.

In a preferred embodiment of the process according to the invention, the organogel material is dispersed in the reaction mixture in an amount of at least 0.1 wt. %, preferably at least 1 wt. %, more preferably at least 5 wt. % and most preferably at least 10 wt. %, calculated on the total weight of the polyurethane foam prepared from the reaction mixture.

In a further preferred embodiment of the process according to the invention, the organogel material is dispersed in the reaction mixture in an amount of less than 40 wt. %, preferably less than 30 wt. % and more preferably less than 20 wt. %, calculated on the total weight of the polyurethane foam prepared from the reaction mixture.

Advantageously, the organogel is a gel selected from the group consisting of polyurethane gels, oil extended thermoplastic block copolymer gels, in particular SEBS gels, silicone gels and PVC plastisol gels, the organogel material being preferably a polyurethane gel.

In a particular embodiment, which is especially suited for body support applications, the flexible polyurethane foam obtained by the process according to the invention has a density of between 25 and 120 kg/m³, a resilience, measured at 20°C in accordance with ASTM D 3574 H, higher than 35%, and an ILD 40% hardness, measured in accordance with ISO 2439 B, between 60 and 500 N.

To provide good support properties, the SAG factor of the foam is preferably greater than 1.8, more preferably greater than 2.0 and most preferably greater than 2.2.

The invention also relates to the flexible polyurethane foam obtained by the process according to the invention. This foam may comprise cell ribs and cell walls, the organogel material being incorporated in the foam to form at least part of these cell ribs and/or cell walls, or the foam may comprise substantially only cell ribs (being in particular a reticulated foam), the organogel material being incorporated in the foam to form at least part of these cell ribs. In a preferred embodiment, the organogel material forms gel inclusions in the cell ribs and/or cell walls. The physical properties of the foam are thus changed by the presence of the organogel inclusions in the cell ribs and/or in the cell walls.

Other particularities and advantages of the invention will become apparent from the following description of some particular embodiments of the process for preparing a flexible polyurethane foam according to the present invention.

The invention is directed to a process for the preparation of a flexible polyurethane foam. The term polyurethane foam embraces not only pure polyurethane foam but also polyurea modified polyurethane foams. The term "flexible" indicates a foam which has an ILD 40% hardness of less than 500 N and thus embraces also soft or hypersoft foams. The flexible polyurethane foam can be intended for several applications but is especially intended for seating and bedding applications. It has preferably an ILD 40% hardness, measured in accordance with ISO 2439 B, between 60 and 500 N, and more preferably between 75 and 200 N. The resilience or ball rebound of the foam, measured at 20°C in accordance with ASTM D 3574 H, is preferably higher than 35% and more preferably higher than 45%. The density of the foam is preferably between 25 and 120 kg/m³ and is more preferably lower than 100 kg/m³ and most preferably lower than 80 kg/m³. The foam is preferably an open cell foam.

The flexible polyurethane foam is prepared by allowing a reaction mixture, which comprises a blowing agent, to foam. The blowing agent preferably comprises water which reacts with isocyanate groups to produce carbon dioxide gas. The known one-shot, semi-prepolymer or full prepolymer techniques may be used together with conventional mixing equipment and the foams may be produced in the form of slabstock, mouldings and the like. In the full prepolymer techniques, the reaction mixture is prepared by mixing an isocyanate prepolymer with an aqueous mixture (comprising a surfactant) to produce the polyurethane foam. This technique is used in particular for preparing hydrophilic polyurethane foam. For producing flexible polyurethane foam for seating and bedding applications, the one-shot or the semi-prepolymer techniques are usually applied. In these techniques a polyurethane reaction mixture is composed by mixing at least an isocyanate component and an isocyanate reactive component. In the semi-prepolymer techniques, the isocyanate component comprises an isocyanate prepolymer and/or the isocyanate reactive component comprises an isocyanate reactive prepolymer, in particular a polyol prepolymer.

An essential feature of the process according to the invention is that before the reaction mixture is allowed to foam, at least one organogel material is dispersed therein. The organogel material is in other words distributed substantially evenly throughout the liquid reaction mixture. The organogel can be dispersed in the reaction mixture by adding it separately to that reaction mixture. When the reaction mixture is composed by mixing at least an isocyanate component and an isocyanate reactive component, it can be dispersed in one or both of these components, preferably in the isocyanate reactive component.

The organogel is a dimensionally stable, jelly-like material. It consists mainly of a liquid but it behaves like a solid due to the presence of a three-dimensional crosslinked network within the liquid. The liquid in an organogel is an organic liquid whilst the liquid in a hydrogel is water. An important drawback of hydrogels is that they easily dry out because of the evaporation of water, which leads to hardening of hydrogels. In the process according to the invention this cannot be prevented by encasing the gel material in an elastic film since the gel material is to be dispersed in the reaction mixture. Hydrogels are further disadvanteous in the process according to the invention, because the big amount of water entrapped in the hydrogel, might interfere with the polyurethane foam forming reaction, which is undesired. Consequently, use is made in the process according to the present invention of organogels which contain an organic liquid. This organic liquid is less volatile than water and/or is bonded in the gel so that it will not or substantially not evaporate from the gel material. The gel is preferably an anhydrous gel which contains substantially no water.

One physical property of the gel is the gel strength or gel rigidity. The gel rigidity, expressed in gram Bloom, is determined by the gram weight required to depress a gel a distance of 4 mm with a circular piston having a cross-sectional area of 1 square centimetre at 23°C. It can be determined in accordance with the British Standard BS 757 (1975). The organogel used in the process of the present invention has preferably a gel rigidity of at least 5 grams, more preferably of at least 10 grams and most preferably of at least 20 grams. Such gel rigidities are high enough to support a three-dimensional gel configuration, which is not the case for pre-polymers which may also be contained as explained hereabove in the reaction mixture and which may be quite viscous but which don't show any gel rigidity at all. The organogel has preferably a gel rigidity which is smaller than 700 grams, more preferably smaller than 500 grams and most preferably smaller than 350 grams.

The organogel material may be of different compositions. It may comprise for example a silicone gel, in particular an organosiloxane gel. Suitable examples of such a gel are described in US 4 072 635, which is incorporated herein by way of reference. The organogel material may also comprise a PVC plastisol gel. Examples of such a gel are described in US 5 330 249, which is incorporated herein by way of reference. Oil extended thermoplastic block copolymer gels are also suitable gels. Examples of these oil gels, more particularly of SEBS gels (poly(styrene-ethylene-butylene-styrene) gels), are described in US 5 508 334 and US 5 336 708, which are incorporated herein by way of reference. These oil gels contain high levels of a plasticizing oil to achieve the gelatinous properties.

The organogel material used in the process of the present invention preferably comprises a polyurethane gel. Examples of such polyurethane gels are described in US 4 404 296, US 4 456 642 and in US 5 362 834, which are incorporated herein by way of reference.

Polyurethane gels, are materials of gel-like consistency, which contain one or more polyols within a certain molecular weight range as the coherent dispersing agent in which a polymeric network which is covalently linked via urethane bonds, is dispersed. They can for instance be obtained by reacting one or more higher-functional higher-molecular weight polyols with a quantity of an organic di- or polyisocyanate in the presence of appropriate polyurethane forming catalysts, provided that an isocyanate index between 15-60 is applied and provided that the isocyanate component or polyol component has a certain minimum functionality and that the polyol is essentially free of any polyol having an OH number greater than 112 or a molecular weight below 800. The anhydrous polyurethane gels prepared in this way consist of a high-molecular weight covalently crosslinked polyurethane matrix, dispersed in a liquid dispersing agent (polyol) firmly bonded in the matrix. The liquid dispersing agent is a polyhydroxy (poylol) compound having a molecular weight between 1000 and 12000 and an OH number between 20 and 112, and is free of hydroxy compounds having a molecular weight below 800. The advantage of these polyurethane gels is that their consistency can be varied between a jelly-like or gelatine state and a solid jelly by varying the isocyanate index and the functionality of the starting materials, and that they have an exceptional stability, even at high temperatures, due to the fact that the polyol dispersing agent is firmly bonded in the gel. The preparation of the gels can be obtained by the so-called one-shot process or by a prepolymer process, as is clearly disclosed in US 4 456 642. The obtained gels can be used in a wide variety of forms, such as granulates, foils, molded articles. A gel granulate is particularly preferred when the gel is to be admixed to a polyurethane forming composition.

Up to 50 % of an active ingredient may be included in the gel-forming composition. Active ingredients refer to any additive capable of providing a benefit to a user, such as for instance biocides, fragrances, anti-allergic agents, fungicides, phase change materials (PCM)... They are preferably mixed or dispersed in the polyol component before the other reactants are combined with the polyol. Organogels containing active ingredients have the advantage over the known polyurethane foams, that the outward migration of even solid or low volatile active ingredients, remains active over a long time period. Other filler types can be added as well to the gel, such as powders, nanoparticles, microspheres of synthetic or natural materials.

The organogel is preferably dispersed in the reaction mixture in an amount of at least 0.1 wt. %, preferably at least 1 wt. %, more preferably at least 5 wt. % and most preferably at least 10 wt. %. The amount of organogel dispersed in the reaction mixture is preferably smaller than 40 wt. %, more preferably smaller than 30 wt. % and most preferably smaller than 20 wt. %. These percentages are calculated on the total weight of the polyurethane foam prepared from the reaction mixture.

The organogel is preferably dispersed in the reaction mixture in the form of particles having an average volume of between 0.001 and 10 mm³, which average volume is preferably larger than 0.01 mm³, more preferably larger than 0.1 mm³, and preferably smaller than 2 mm³, more preferably smaller than 0.5 mm³. Such particle size can be achieved by adding the organogel in a particulate form, more particularly in a granular of powder form or it can be achieved by adding larger pieces of gel material and by homogenizing these pieces of gel material. This can be done in the reaction mixture itself and/or in one or more of the components which are mixed with one another to compose the reaction mixture.

Due to the fact that the organogel material is dispersed in the reaction mixture, and does not dissolve entirely therein, the dispersed particles of the organogel are incorporated in the flexible polyurethane foam during foam expansion, more particularly in the cell ribs and/or cell walls thereof. The organogel forms inclusions in these cell ribs and/or cell walls. At the interface between the polyurethane material and the organogel material, some of the reaction components of the polyurethane material may have penetrated somewhat into the organogel material, which may provide for an increased adhesion between both materials. When the organogel material comprises reactive groups which may react with one or more of the reaction components of the polyurethane material, a chemical bond can also be achieved between both materials, leading to a strong immobilisation of the PU gel in the PU foam.

The presence of the organogel inclusions in the cell ribs and/or cell walls of the polyurethane foam influences the physical and/or thermophysiological properties of the foam. They may for example reduce the tensile stresses in the foam thus improving the pressure distribution properties. On the other hand, they can give the foam also a softer, gel-like feel and thus improve the comfort feeling of the foam. They may also have an effect on the heat capacity of the foam and even on the thermal conductivity, thus giving the foam a cooler feel. Since the gel particles will also have some effect on the foam formation, they may also increase the open cell content of the foam.

The presence of inclusions of another material in the polyurethane material of the flexible foam, may also reduce some physical foam properties such as the wet compression set. It has however been found that the wet compression set of the foam can be improved by the use of a polyol having a high oxyethylene unit content.

As explained already hereabove, the reaction mixture is preferably composed by mixing at least an isocyanate component and an isocyanate reactive component. The organogel can be dispersed in the reaction mixture itself, in the isocyanate component and/or in the isocyanate reactive component.

The polyisocyanate component comprises usually only one but may comprise more than one polyisocyanate compounds (= polyisocyanates). Organic polyisocyanates which are conventionally used in the preparation of flexible polyurethane foams include aliphatic, cycloaliphatic and araliphatic polyisocyanates, as well as aromatic polyisocyanates, such as the commercial TDI (toluene diisocyanate), MDI (diphenylmethane diisocyanate), and crude or polymeric MDI.

Polymeric MDI may contain at least 70 % by weight of pure MDI (4,4'-isomer or isomer mixture) and up to 30 % by weight of the so-called polymeric MDI containing from 25 to 65 % by weight of diisocyanates, the remainder being largely polymethylene polyphenylene polyisocyanates having isocyanate functionalities greater than 2. Mixtures may also be used of pure MDI and polymeric MDI compositions containing higher proportions (up to 100 %) of the said higher functionality polyisocyanates.

Modified isocyanates are also useful. Such isocyanates are generally prepared through the reaction of a commercial isocyanate, for example TDI or MDI, with a low molecular weight diol or amine. Modified isocyanates can also be prepared through the reaction of the isocyanates with themselves, producing isocyanates containing allophanate, uretonimine, carbodiimide or isocyanurate linkages. Modified forms of MDI including polyurea dispersions in MDI have for instance been described in EP-A-0 103 996.

The isocyanate reactive component may comprise moreover one or more solid polymers, which are no organogels, stably dispersed in this component. The production of stably dispersed polymers within polyols to make polymer polyols is known in the art. The basic patents in the field are US 3 383 351 and US 3 304 273. Such compositions can be produced by polymerizing one or more ethylenically unsaturated monomers dissolved or dispersed in a polyol in the presence of a free radical catalyst to form a stable dispersion of polymer particles in the polyol. These polymer polyol compositions have the valuable property of imparting to polyurethane foams produced therefrom higher load-bearing properties than are provided by the corresponding unmodified polyols. Also included are the polyols like those taught in US 3 325 421 and US 4 374 209.

A wide variety of monomers may be utilized in the preparation of the polymer polyol. Numerous ethylenically unsaturated monomers are disclosed in the prior patents and polyurea and polyurethane suspension polymers can also been utilized. Exemplary monomers include styrene and its derivatives such as para-methylstyrene, acrylates, methacrylates such as methyl methacrylate, acrylonitrile and other nitrile derivatives such as methacrylonitrile, and the like. Vinylidene chloride may also be employed. The preferred monomer mixtures used to make the polymer polyol are mixtures of acrylonitrile and styrene (SAN polyols) or acrylonitrile, styrene and vinylidene chloride.

In order to avoid the negative influence of the organogel particles and of the solid polymer particles on the wet compression set of the foam, the isocyanate reactive component comprises preferably isocyanate reactive compounds which include, per 100 parts by weight thereof (not including the water and any organogel or any solid polymer dispersed therein):
a) 50 to 80 parts of one or more polyoxyalkylene polyols having an oxyethylene unit content of at least 40 wt. % of the oxyalkylene units of the polyoxyalkylene polyol, a hydroxyl number of between 20 and 100, preferably of between 20 and 60, and a nominal functionality of 2 to 4; and
b) 20 to 50 parts of one or more further polyoxyalkylene polyols containing no oxyethylene units or having an oxyethylene unit content lower than 40 wt. % of the oxyalkylene units of the further polyoxyalkylene polyol, and having a hydroxyl number of between 20 and 100, preferably of between 20 and 60, and a nominal functionality of 2 to 4.

The term "nominal functionality" is used herein to indicate the functionality (number of hydroxyl groups per molecule) of the polyol on the assumption that the functionality of the polyoxyalkylene polyol is equal to the functionality (= number of active hydrogen atoms per molecule) of the initiator used in its preparation, although in practice it will often be somewhat less because of some terminal unsaturation. When two or more initiators are used so that a mixture of polyoxyalkylene polyols is obtained, each of the different polyols of this mixture is to be considered as a separate polyol (isocyanate reactive compound). The initiator may be for example glycerine, trimethylolpropane or diethylene triamine.

The parts and percentages mentioned in the present specification are all by weight.

The term "hydroxyl number" indicates the number of milligrams KOH which are equivalent to one gram of polyol sample so that the equivalent weight of the polyol = 56100 / hydroxyl number.

The polyoxyalkylene polyols of type a which have an oxyethylene unit content of at least 40 wt. %, i.e. the EO rich polyol or polyols, are preferably used in an amount of at least 55 parts, more preferably in an amount of at least 60 parts, and most preferably in an amount of at least 65 parts per 100 parts of the isocyanate reactive groups containing compounds. Preferably, they are used in an amount of less than 75 parts per 100 parts of the isocyanate reactive groups containing compounds in view of the better mechanical properties which can be achieved and also in view of maintaining a good processability.

The high amount of the EO rich polyol or polyols, also increases the open cell content of the foam. An advantage of an open cell foam is that it does not shrink after its production, and does not require a separate crushing or reticulation step, as is usually required with the conventional HR polyurethane foams. The EO rich polyol or polyols preferably have an oxyethylene unit content of at least 50 wt. %, more preferably of at least 60 wt. % and most preferably of at least 70 wt. %, of the oxyalkylene units of the polyoxyalkylene polyol. Advantagously, the EO rich polyol or polyols have an oxyethylene unit content of less than 90 wt. %, preferably of less than 85 wt. % and more preferably of less than 80 wt. %, of the oxyalkylene units of the polyoxyalkylene polyol.

In addition to the oxyethylene units, the oxyalkylene chains usually comprise oxypropylene units. A portion of the ethylene oxide (in particular less than 25% of the oxylkylene units) may be used for end capping the oxyalkylene chains so that the polyol has a higher primary hydroxyl content, for example a primary OH content higher than 50%. In this way, the polyol is more reactive towards the isocyanates. The remaining part of the oxyethylene units should be distributed over the oxyalkylene chain and this preferably randomly.

The isocyanate reactive compounds may contain, in addition to the EO rich polyol or polyols of type a and the further polyol or polyols of type b (which have a lower EO content), other compounds which have a relatively large equivalent weight, more particularly an equivalent weight higher than 561 (=56100/100). These compounds include for example polyesters containing primary or secondary hydroxyl groups or also polyamines. However, the isocyanate reactive compounds preferably comprise, per 100 parts, at least 85 parts, more preferably at least 95 parts, of the EO rich polyol or polyols of type a and of the further polyol or polyols of type b (which are polyether polyols).

By the process according to the invention, foams can be produced having a tear resistance, measured in accordance with ASTM D3574 F, higher than 1 N/cm, an elongation, measured in accordance with EN ISO 1798, higher than 100 %, and a tensile strength, measured in accordance with EN ISO 1798 , higher than 50 kPa, preferably higher than 70 kPa.

The preferred foaming agent for use in the process of the invention is water, optionally in conjunction with a physical blowing agent, for example a low boiling organofluoro compound. As is known to the skilled person, the amount of foaming agent may be varied in order to achieve the desired foam density. Preferably water is the only foaming agent. The isocyanate index (NCO index) of the reaction system may vary between 80 and 120, but is preferably higher than 90 and more preferably higher than 100. A higher isocyanate index can assist in achieving a higher foam hardness.

The foam formulation may contain one or more of the additives conventional to polyurethane foam formulations. Such additives include catalysts, for example tertiary amines and tin compounds, surface-active agents and foam stabilisers, for example siloxane-oxyalkylene copolymers, flame retardants, organic and inorganic fillers, pigments, agents for suppressing the so-called boiling-foam effect such as poly-dimethyl siloxanes, and internal mould release agents for moulding applications.

## Claims

1. A process for the preparation of a flexible polyurethane foam wherein a reaction mixture, which comprises a blowing agent, is allowed to foam to produce the polyurethane foam, **characterised in that** before allowing said reaction mixture to foam, at least one organogel material is dispersed therein.

2. A process according to claim 1, **characterised in that** said organogel material is dispersed in the reaction mixture in an amount of at least 0.1 wt. %, preferably at least 1 wt. %, more preferably at least 5 wt. % and most preferably at least 10 wt. %, calculated on the total weight of the polyurethane foam prepared from the reaction mixture.

3. A process according to claim 1 or 2, **characterised in that** said organogel material is dispersed in the reaction mixture in an amount of less than 40 wt. %, preferably less than 30 wt. % and more preferably less than 20 wt. %, calculated on the total weight of the polyurethane foam prepared from the reaction mixture.

4. A process according to any one of the claims 1 to 3, **characterised in that** said organogel material is a gel selected from the group consisting of polyurethane gels, oil extended thermoplastic block copolymer gels, in particular SEBS gels, silicone gels and PVC plastisol gels, and the organogel material being preferably a polyurethane gel.

5. A process according to any one of the claims 1 to 4, **characterised in that** said organogel material is dispersed in said reaction mixture in the form of particles having an average volume of between 0.001 and 10 mm³, which average volume is preferably larger than 0.01 mm³, more preferably larger than 0.1 mm³, and preferably smaller than 2 mm³, more preferably smaller than 0.5 mm³.

6. A process according to any one of the claims 1 to 5, **characterised in that** said reaction mixture is a polyurethane reaction mixture composed by mixing at least an isocyanate component and an isocyanate reactive component, at least a portion of said organogel material being dispersed in said isocyanate reactive component before mixing it with the isocyanate component.

7. A process according to any one of the claims 1 to 6, **characterised in that** said reaction mixture is a polyurethane reaction mixture composed by mixing at least an isocyanate component and an isocyanate reactive component, the isocyanate reactive component comprising isocyanate reactive compounds including, per 100 parts by weight thereof,
a) 50 to 80 parts of one or more polyoxyalkylene polyols having an oxyethylene unit content of at least 40 wt. % preferably of at least 50 wt. %, more preferably of at least 60 wt. % and most preferably of at least 70 wt. %, of the oxyalkylene units of the polyoxyalkylene polyol, a hydroxyl number of between 20 and 100, preferably of between 20 and 60, and a nominal functionality of 2 to 4, the oxyethylene unit content being preferably smaller than 90 wt. %, preferably smaller than 85 wt. % and more preferably smaller than 80 wt. %, of the oxyalkylene units of the polyoxyalkylene polyol; and
b) 20 to 50 parts of one or more further polyoxyalkylene polyols containing no oxyethylene units or having an oxyethylene unit content lower than 40 wt. % of the oxyalkylene units of the further polyoxyalkylene polyol, and having a hydroxyl number of between 20 and 100, preferably of between 20 and 60, and a nominal functionality of 2 to 4,
the isocyanate reactive compounds comprising, per 100 parts by weight thereof, preferably at least 85 parts, and more preferably at least 95 parts, of said one or more polyoxyalkylene polyols and said one or more further polyoxyalkylene polyols.

8. A process according to claim 7, **characterised in that** the isocyanate reactive compounds comprise, per 100 parts by weight thereof, at least 55 parts, preferably at least 60 parts, more preferably at least 65 parts of said one or more polyoxyalkylene polyols which have an oxyethylene unit content of at least 40 wt. %.

9. A process as claimed in claim 7 or 8, **characterised in that** the isocyanate reactive compounds comprise, per 100 parts by weight thereof, less than 75 parts of said one or more polyoxyalkylene polyols which have an oxyethylene unit content of at least 40 wt. %.

10. A flexible polyurethane foam prepared by a process according to any one of the claims 1 to 9.

11. A flexible polyurethane foam according to claim 10 **characterised in that** said organogel material is incorporated in the foam to form at least part of the cell ribs, the organogel material forming in particular inclusions in said cell ribs.

12. A flexible polyurethane foam according to claim 10 **characterised in that** said organogel material is incorporated in the foam to form at least part of the cell ribs and/or cell walls, the organogel material forming in particular inclusions in said cell ribs and/or cell walls.

13. A flexible polyurethane foam according to any one of the claims 10 to 12, **characterised in that** the reaction mixture comprises such an amount of said blowing agent that the prepared polyurethane foam has a density of between 25 and 120 kg/m³, the density of the prepared polyurethane foam being preferably lower than 100 kg/m³ and more preferably lower than 80 kg/m³.

14. A flexible polyurethane foam according to any one of the claims 10 to 13, **characterised in that** the prepared polyurethane foam has a resilience, measured at 20°C in accordance with ASTM D 3574 H, higher than 35% and preferably higher than 45%.

15. A flexible polyurethane foam according to any one of the claims 10 to 14, **characterised in that** the prepared polyurethane foam has an ILD 40% hardness, measured in accordance with ISO 2439 B, between 60 and 500 N, and preferably between 75 and 200 N.

## Patentansprüche

1. Ein Verfahren zur Herstellung eines flexiblen Polyurethanschaums, in dem man eine Reaktionsmischung, die ein Treibmittel enthält, aufschäumen lässt, um den Polyurethanschaum herzustellen, **dadurch gekennzeichnet, dass**, bevor die erwähnte Reaktionsmischung aufschäumen kann, zumindest ein Organogelmaterial darin verteilt wird.

2. Ein Verfahren nach Anspruch 1, **dadurch gekennzeichnet, dass** das erwähnte Organogelmaterial in der Reaktionsmischung in einer Menge von mindestens 0,1 Gew.-%, vorzugsweise mindestens 1 Gew.-%, noch besser mindestens 5 Gew.-% und am besten mindestens 10 Gew.-% verteilt wird, berechnet nach dem Gesamtgewicht des Polyurethanschaums, der aus der Reaktionsmischung hergestellt wird.

3. Ein Verfahren nach Anspruch 1 oder 2, **dadurch gekennzeichnet, dass** das erwähnte Organogelmaterial in der Reaktionsmischung in einer Menge von weniger als 40 Gew.-%, vorzugsweise weniger als 30 Gew.-% und noch besser weniger als 20 Gew.-% verteilt wird, berechnet nach dem Gesamtgewicht des Polyurethanschaums, der aus der Reaktionsmischung hergestellt wird.

4. Ein Verfahren nach irgendeinem der Ansprüche 1 bis 3, **dadurch gekennzeichnet, dass** das erwähnte Organogelmaterial ein Gel aus der Gruppe bestehend aus Polyurethangelen, ölgestreckten thermoplastischen Block-Copolymergelen, insbesondere SEBS-Gelen, Silikongelen und PVC-Plastisolgelen ist, wobei das Organogelmaterial vorzugsweise ein Polyurethangel ist.

5. Ein Verfahren nach irgendeinem der Ansprüche 1 bis 4, **dadurch gekennzeichnet, dass** das erwähnte Organogelmaterial in der erwähnten Reaktionsmischung in Form von Partikeln mit einem durchschnittlichen Volumen von zwischen 0,001 und 10 mm³ verteilt ist, wobei dieses durchschnittliche Volumen vorzugsweise größer als 0,01 mm³, noch besser größer als 0,1 mm³, und vorzugsweise kleiner als 2 mm³, noch besser kleiner als 0,5 mm³ ist.

6. Ein Verfahren nach irgendeinem der Ansprüche 1 bis 5, **dadurch gekennzeichnet, dass** die erwähnte Reaktionsmischung eine Polyurethanreaktionsmischung ist, die durch Mischen zumindest einer Isocyanatkomponente und einer isocyanat-reaktiven Komponente entsteht, wobei zumindest ein Teil des erwähnten Organogelmaterials in der erwähnten isocyanat-reaktiven Komponente verteilt wird, bevor diese mit der Isocyanatkomponente gemischt wird.

7. Ein Verfahren nach irgendeinem der Ansprüche 1 bis 6, **dadurch gekennzeichnet, dass** die erwähnte Reaktionsmischung eine Polyurethanreaktionsmischung ist, die durch Mischen zumindest einer Isocyanatkomponente und einer isocyanat-reaktiven Komponente entsteht, wobei die isocyanat-reaktive Komponente isocyanat-reaktive Verbindungen enthält, die pro 100 Massenanteile davon Folgendes umfassen:
a) 50 bis 80 Teile eines oder mehrerer Polyoxylalkylen-Polyole mit einem Gehalt an Oxyethyleneinheiten von mindestens 40 Gew.-%, vorzugsweise mindestens 50 Gew.-%, noch besser mindestens 60 Gew.-% und am bestens von mindestens 70 Gew.-%, der Oxyethyleneinheiten des Polyoxylalkylen-Polyols, mit einer Hydroxylzahl zwischen 20 und 100, vorzugsweise zwischen 20 und 60, und einer nominalen Funktionalität von 2 bis 4, wobei der Gehalt an Oxyethyleneinheiten vorzugweise geringer als 90 Gew.-%, vorzugsweise geringer als 85 Gew.-% und noch besser geringer als 80 Gew.-% der Oxyethyleneinheiten des Polyoxylalkylen-Polyols ist; und
b) 20 bis 50 Teile eines oder mehrerer weiterer Polyoxylalkylen-Polyole, die keine Oxyethyleneinheiten enthalten oder einen Gehalt an Oxyethyleneinheiten von weniger als 40 Gew.-% der Oxyethyleneinheiten des weiteren Polyoxylalkylen-Polyols haben und eine Hydroxylzahl zwischen 20 und 100, vorzugsweise zwischen 20 und 60, und eine nominale Funktionalität von 2 bis 4,
wobei die isocyanat-reaktiven Verbindungen, pro 100 Massenanteile davon, vorzugsweise mindestens 85 Teile, und noch besser mindestens 95 Teile, des erwähnten einen Polyoxylalkylen-Polyols oder der erwähnten mehreren Polyoxylalkylen-Polyole und des erwähnten einen weiteren Polyoxylalkylen-Polyols oder der erwähnten mehreren weiteren Polyoxylalkylen-Polyole umfassen.

8. Ein Verfahren nach Anspruch 7, **dadurch gekennzeichnet, dass** die isocyanat-reaktiven Verbindungen, pro 100 Massenanteile davon, mindestens 55 Teile, vorzugsweise mindestens 60 Teile, noch besser mindestens 65 Teile des erwähnten einen Polyoxylalkylen-Polyols oder der erwähnten mehreren Polyoxylalkylen-Polyole umfassen, die einen Gehalt an Oxyethyleneinheiten von mindestens 40 Gew.-% haben.

9. Ein Verfahren wie beansprucht in Anspruch 7 oder 8, **dadurch gekennzeichnet, dass** die isocyanat-reaktiven Verbindungen, pro 100 Massenanteile davon, zumindest 75 Teile des erwähnten einen Polyoxylalkylen-Polyole(s) oder der erwähnten mehreren Polyoxylalkylen-Polyole umfassen, die einen Gehalt an Oxyethyleneinheiten von mindestens 40 Gew.-% haben.

10. Ein flexibler Polyurethanschaum hergestellt durch ein Verfahren nach irgendeinem der Ansprüche 1 bis 9.

11. Ein flexibler Polyurethanschaum nach Anspruch 10, **dadurch gekennzeichnet, dass** das erwähnte Organogelmaterial in den Schaum integriert ist, um zumindest einen Teil der Zellenrippen zu bilden, wobei das Organogelmaterial insbesondere Einschlüsse in den erwähnten Zellrippen bildet.

12. Ein flexibler Polyurethanschaum nach Anspruch 10, **dadurch gekennzeichnet, dass** das erwähnte Organogelmaterial in den Schaum integriert ist, um zumindest einen Teil der Zellenrippen und/oder Zellwände zu bilden, wobei das Organogelmaterial insbesondere Einschlüsse in den erwähnten Zellrippen und/oder Zellwänden bildet.

13. Ein flexibler Polyurethanschaum nach irgendeinem der Ansprüche 10 bis 12, **dadurch gekennzeichnet, dass** die Reaktionsmischung eine solche Menge des erwähnten Treibmittels enthält, dass der hergestellte Polyurethanschaum eine Dichte von zwischen 25 und 120 kg/m³ hat, wobei die Dichte des hergestellten Polyurethanschaums vorzugsweise niedriger als 100 kg/m³ und noch besser niedriger als 80 kg/m³ ist.

14. Ein flexibler Polyurethanschaum nach irgendeinem der Ansprüche 10 bis 13, **dadurch gekennzeichnet, dass** der hergestellte Polyurethanschaum eine Elastizität, gemessen bei 20 °C gemäß ASTM D 3574 H, von mehr als 35 % und vorzugsweise mehr als 45 % hat.

15. Ein flexibler Polyurethanschaum nach irgendeinem der Ansprüche 10 bis 14, **dadurch gekennzeichnet, dass** der hergestellte Polyurethanschaum eine ILD 40 %-Härte, gemessen in Übereinstimmung mit ISO 2439 B, von zwischen 60 und 500 N, und vorzugsweise zwischen 75 und 200 N hat.

## Revendications

1. Procédé pour la préparation d'une mousse de polyuréthane souple, dans lequel on permet à un mélange de réaction, qui comprend un agent d'expansion, de mousser pour produire la mousse de polyuréthane, **caractérisé en ce qu'**avant de permettre audit mélange de réaction de mousser, au moins un matériau organogel est dispersé dans celui-ci.

2. Procédé selon la revendication 1, **caractérisé en ce que** ledit matériau organogel est dispersé dans le mélange de réaction dans une quantité d'au moins 0,1 % en poids, de préférence d'au moins 1 % en poids, mieux encore d'au moins 5 % en poids et idéalement d'au moins 10 % en poids, calculée sur le poids total de la mousse de polyuréthane préparée à partir du mélange de réaction.

3. Procédé selon la revendication 1 ou 2, **caractérisé en ce que** ledit matériau organogel est dispersé dans le mélange de réaction dans une quantité de moins de 40 % en poids, de préférence de moins de 30 % en poids et mieux encore de moins de 20 % en poids, calculée sur le poids total de la mousse de polyuréthane préparée à partir du mélange de réaction.

4. Procédé selon l'une quelconque des revendications 1 à 3, **caractérisé en ce que** ledit matériau organogel est un gel sélectionné dans le groupe consistant en gels de polyuréthane, des gels de copolymères à blocs thermoplastiques étendus à l'huile, en particulier des gels SEBS, des gels de silicone et des gels plastisols PVC et le matériau organogel étant de préférence un gel de polyuréthane.

5. Procédé selon l'une quelconque des revendications 1 à 4, **caractérisé en ce que** ledit matériau organogel est dispersé dans ledit mélange de réaction sous la forme de particules ayant un volume moyen compris entre 0,001 et 10 mm³, lequel volume moyen est de préférence supérieur à 0,01 mm³, mieux encore supérieur à 0,1 mm³, et de préférence inférieur à 2 mm³, mieux encore inférieur à 0,5 mm³.

6. Procédé selon l'une quelconque des revendications 1 à 5, **caractérisé en ce que** ledit mélange de réaction est un mélange de réaction de polyuréthane composé en mélangeant au moins un composé isocyanate et un composé réactif isocyanate, au moins une partie dudit matériau organogel étant dispersée dans ledit composé réactif isocyanate avant de le mélanger avec le composé isocyanate.

7. Procédé selon l'une quelconque des revendications 1 à 6, **caractérisé en ce que** ledit mélange de réaction est un mélange de réaction de polyuréthane composé en mélangeant au moins un composé isocyanate et un composé réactif isocyanate, le composé réactif isocyanate comprenant des composés réactifs isocyanate comprenant, par 100 parties en poids de ceux-ci,
a) de 50 à 80 parties d'un ou plusieurs polyoxyalkylène polyols ayant une teneur en unités oxyéthylène d'au moins 40 % en poids, de préférence d'au moins 50 % en poids, mieux encore d'au moins 60 % en poids et idéalement d'au moins 70 % en poids, des unités oxyalkylène du polyoxyalkène polyol, un indice d'hydroxyle compris entre 20 et 100, de préférence entre 20 et 60, et une fonctionnalité nominale de 2 à 4, la teneur en unités oxyéthylène étant de préférence inférieure à 90 % en poids, de préférence inférieure à 85 % en poids et mieux encore inférieure à 80 % en poids, des unités oxyalkylène du polyoxyalkylène polyol ; et
b) de 20 à 50 parties d'un ou plusieurs polyoxyalkylène polyols ne contenant aucune unité oxyéthylène ou ayant une teneur en unités oxyéthylène inférieure à 40 % en poids des unités oxyalkylène de l'autre polyoxyalkylène polyol, et un indice d'hydroxyle compris entre 20 et 100, de préférence entre 20 et 60, et une fonctionnalité nominale de 2 à 4,
les composés réactifs isocyanate comprenant, par 100 parties en poids de ceux-ci, de préférence au moins 85 parties, et mieux encore au moins 95 parties, desdits un ou plusieurs polyoxyalkylène polyols et desdits un ou plusieurs autres polyoxyalkylène polyols.

8. Procédé selon la revendication 7, **caractérisé en ce que** les composés réactifs isocyanate comprennent, par 100 parties en poids de ceux-ci, au moins 55 parties,de préférence au moins 60 parties, mieux encore au moins 65 parties desdits un ou plusieurs polyoxyalkylène polyols qui ont une teneur en unités oxyéthylène d'au moins 40 % en poids.

9. Procédé tel que revendiqué dans la revendication 7 ou 8, **caractérisé en ce que** les composés réactifs isocyanate comprennent, par 100 parties en poids de ceux-ci, moins de 75 parties desdits un ou plusieurs polyoxyalkylène polyols qui ont une teneur en unités oxyéthylène d'au moins 40 % en poids.

10. Mousse de polyuréthane souple préparée par un procédé selon l'une quelconque des revendications 1 à 9.

11. Mousse de polyuréthane souple selon la revendication 10, **caractérisée en ce que** ledit matériau organogel est incorporé dans la mousse pour faire au moins partie des nervures de cellule, le matériau organogel formant en particulier des inclusions dans lesdites nervures de cellule.

12. Mousse de polyuréthane souple selon la revendication 10, **caractérisée en ce que** ledit matériau organogel est incorporé dans la mousse pour faire au moins partie des nervures de cellule et / ou cloisons de cellule, le matériau organogel formant en particulier des inclusions dans lesdites nervures de cellule et / ou cloisons de cellule.

13. Mousse de polyuréthane souple selon l'une quelconque des revendications 10 à 12, **caractérisée en ce que** le mélange de réaction comprend une quantité telle dudit agent d'expansion que la mousse de polyuréthane préparée a une masse volumique comprise entre 25 et 120 kg / m³, la masse volumique de la mousse de polyuréthane préparée étant de préférence inférieure à 100 kg / m³ et mieux encore inférieure à 80 kg / m³.

14. Mousse de polyuréthane souple selon l'une quelconque des revendications 10 à 13, **caractérisée en ce que** la mousse de polyuréthane préparée a une résilience, mesurée à 20° C selon ASTM D 3574 H, supérieure à 35 % et de préférence supérieure à 45 %.

15. Mousse de polyuréthane souple selon l'une quelconque des revendications 10 à 14, **caractérisée en ce que** la mousse de polyuréthane préparée a une dureté par indentation (ILD) de 40 %, mesurée selon ISO 2439 B, comprise entre 60 et 500 N et de préférence entre 75 et 200 N.
